# EUROPÄISCHE PATENTANMELDUNG

(11) **EP 3 239 549 A1**
(43) Veröffentlichungstag der Anmeldung: **01.11.2017**
(21) Anmeldenummer: 17165551.7
(22) Anmeldetag: 07.04.2017
(51) Int. Cl.: F16D 13/00, F16D 13/52

(54) **REIBKUPPLUNG MIT ZWISCHENELEMENT**

(30) Priorität: 27.04.2016 DE 102016207196
(71) Anmelder: Deere & Company, Moline, IL 61265 (US)
(72) Erfinder: Raisch, Stefan, 68163 Mannheim (DE)
(74) Vertreter: Dehnhardt, Florian Christopher

(57) **Zusammenfassung**

Die Reibkupplung (10) weist wenigstens zwei miteinander kuppelbare Kupplungselemente (11) auf, die axial zueinander beweglich angeordnet sind, wobei direkt benachbarte Kupplungselemente (11) jeweils zwei Seiten eines Leistungszweiges der Kupplung zugeordnet sind, ein Zwischenelement (12), an dem die Kupplungselemente (11) einer Seite des Leistungszweiges in einer axialen Richtung der Kupplungselemente (11) beweglich gehalten sind, wobei das Zwischenelement (12) zwischen einem arretierten Zustand und einem freien Zustand schaltbar ist, und ein Betätigungselement (13) zum Öffnen und Schließen der Reibkupplung (13).

## Beschreibung

Die Erfindung behandelt eine Kupplung, speziell eine Reibkupplung. Kupplungen werden in allen Arten von Antrieben verwendet, bei denen ein Trennen des Antriebsstranges während des Betriebs vorgesehen ist. Diese können in Fahrzeugen aller Art verwendet werden, jedoch auch in stationären Anlagen, die ein Entkuppeln im Betrieb vorsehen.

Kupplungen dieser Art sind schaltbar, so dass sie während dem Betrieb zwischen einem eingekuppelten und einem entkuppelten Zustand umgeschaltet werden können.

Derartige Kupplungen weisen meist scheibenförmige Kupplungsflächen auf, die durch das gegenseitige Aneinanderlegen im gekuppelten oder geschlossenen Zustand Leistung zwischen beiden Seiten der Kupplung übertragen. Dabei kann eine Seite von einem Antrieb mit einem Drehmoment beaufschlagt sein, während die andere Seite die Weiterleitung des Drehmoments an einen Abtrieb vorsieht. Dieser Zustand ist jedoch nicht stationär. Moderne Getriebeanordnungen können je nach Gangwahl dazu führen, dass über dieselbe Kupplung unterschiedliche Drehmomente geleitet werden, auch von unterschiedlichen Seiten ausgehend.

Je nach Verwendung der Kupplung können somit mehrere Leistungszweige von einem angeschlossenen Getriebe über die Kupplung geleitet werden. Dabei kann auch die Richtung des Leistungsflusses über die Kupplung hinweg geändert werden, so dass ein Eingang oder ein Ausgang der Kupplung je nach Betriebszustand wechseln kann.

Im offenen oder entkoppelten Zustand sind die Kupplungsflächen oder Kupplungselemente zueinander durch ein Lüftspiel beabstandet. Meist sind derartige Kupplungen als Nass-Kupplungen ausgeführt und laufen in einer Flüssigkeit zur Schmierung und Wärmeableitung.

Um die Schließvorgänge im Betrieb zeitlich kurz zu halten und auch die Baugröße derartiger Kupplungen klein auszulegen, sind die Kupplungselemente im offenen Zustand zwar beabstandet, jedoch mit nur einem minimalen Lüftspiel, so dass ein Schalten schnell und mit geringem Verstellweg erfolgen kann.

Übliche Kupplungselemente befinden sich auch im offenen Zustand in Wirkverbindung mit den jeweils zugeordneten Seiten der Kupplung. Dies bewirkt, dass sich die Kupplungselemente im offenen Zustand der Kupplung weiterhin mit den Drehzahlen der jeweiligen zugeordneten Seiten der Kupplung drehen. Dadurch liegen die Kupplungselemente in einem kurzen räumlichen Abstand mit entgegengesetzter Drehrichtung im offenen Zustand vor. Durch die Drehung der Kupplungselemente im Ölbad der Kupplung entstehen Scherkräfte durch die Flüssigkeitsreibung. Diese Scherkräfte verursachen ein Schleppmoment und somit Verlustleistung der Kupplung im geöffneten Zustand, wenn eine Leistung an wenigstens einer Seite der Kupplung anliegt. Das führt zu einer Erwärmung der Flüssigkeit und zu Leistungseinbußen im Antrieb. Durch die Erwärmung kann es nicht nur zu Oxidationsprozessen im Öl, sondern weiterhin zu einem steigenden Leistungsverlust kommen, wodurch die Verbrauchswerte für den Antrieb stark ansteigen und gleichzeitig weniger Leistung zum Betrieb zur Verfügung steht.

Es ist somit eine Aufgabe der vorliegenden Erfindung die vorstehend genannten Probleme zu lösen, und eine Kupplung zur Verfügung zu stellen, welche die genannten Nachteile nicht aufweist.

Die Aufgabe wird gelöst durch eine Reibkupplung gemäß dem Hauptanspruch. Die erfindungsgemäße Reibkupplung weist wenigstens zwei miteinander kuppelbare Kupplungselemente auf, die axial zueinander beweglich angeordnet sind, wobei direkt benachbarte Kupplungselemente jeweils zwei Seiten eines Leitungszweiges der Kupplung zugeordnet sind, ein Zwischenelement, an dem die Kupplungselemente einer Seite des Leistungszweiges in einer axialen Richtung der Kupplungselemente beweglich gehalten sind, wobei das Zwischenelement zwischen einem arretierten Zustand und einem freien Zustand schaltbar ist, und ein Betätigungselement zum Öffnen und Schließen der Reibkupplung, wobei im freien Zustand eine freie Drehung der gehaltenen Kupplungselemente gegenüber der zugeordneten Seite des Leistungszweiges zugelassen ist, und im arretierten Zustand die gehaltenen Kupplungselemente gegen eine freie Drehung blockiert sind.

Aufgrund des freien Zustands können sich die Kupplungselemente einer Seite an die Drehzahl und die Drehrichtung der Kupplungselemente der anderen Seite angleichen. Dadurch wird das resultierende Schleppmoment stark verringert und Aufheizung des Öls wird ebenfalls reduziert, wodurch wiederrum die notwendige Kühlung und Wärmeableitung zurückgenommen werden kann. Hierdurch sinkt der Verbrauch von Kraftstoff, da meist mehrere solche Kupplungen in einer Maschine vorgesehen sind, wobei die Mehrzahl der Kupplungen im offenen Zustand während des Betriebs vorliegt, und diese eine verringerte Reibung aufweisen.

In einer bevorzugten Ausführung hält das Zwischenelement die Kupplungselemente an ihrem jeweiligen Außen- oder an ihrem jeweiligen Innenumfang.

Das Zwischenelement kann dadurch an einer beliebigen Seite der Reibkupplung vorgesehen werden. Dies begünstigt eine freie Gestaltung der Reibkupplung und eine vorteilhafte Bauraumausnutzung. Hierdurch kann die Reibkupplung für einen gegebenen Bauraum optimal ausgelegt werden.

In einer weiteren Ausbildung bewegt das Betätigungselement das Zwischenelement von einem freien Zustand in einen arretierten Zustand.

Dadurch kann die Reibkupplung zusammen mit dem Betätigungselement und dem Zwischenelement sehr variabel ausgelegt werden. Das Betätigungselement wirkt somit auf das Zwischenelement ein. Dies kann unter anderem durch Verschieben, Pressen, Drehen, Schieben, Ziehen, Anheben oder Absenken des Zwischenelementes erfolgen, wobei dieses durch das Betätigungselement angesteuert wird.

In einer erfindungsgemäßen Ausführung wird das Zwischenelement in axialer Richtung von einem freien Zustand in einen arretierten Zustand überführt.

Mit der axialen Überführbarkeit kann das Zwischenelement platzsparend innerhalb der Reibkupplung untergebracht werden. Die axiale Richtung ist dabei die axiale Richtung der Kupplungselemente, so dass geringe Abstände vom Zwischenelement zu den Kupplungselementen realisiert werden können. Damit wird auch gleichzeitig der benötigte Einbauraum der Reibkupplung positiv verringert.

In einer bevorzugten Ausbildung wird das Zwischenelement mittels einer Sperrsynchronisation, einer Klauenkupplung oder einer Schaltverzahnung von einem freien in einen arretierten Zustand überführt.

Mit Hilfe der Sperrsynchronisation können die Drehzahlunterschiede des Zwischenelements und der zugehörigen Seite der Kupplung einfach angeglichen werden. Dadurch wird der Verschleiß der Bauteile verringert und es kommt zu einer reduzierten Geräuschentwicklung bei den Zustandsänderungen.

Die Klauenkupplung erlaubt eine platzsparende Umsetzung einer lösbaren Verbindungsmöglichkeit des Zwischenelements und der zugehörigen Seite der Kupplung. Weiterhin sind Klauenkupplungen etabliert, so dass entsprechende Bauteile günstig sind.

Eine Schaltverzahnung ermöglicht eine gleichmäßige Krafteinleitung vom oder in das Zwischenelement. Das führt gleichzeitig zu einer geringeren Belastung des Zwischenelements und zu einer längeren Lebensdauer. Des Weiteren kann eine Schaltverzahnung in eine beliebigen Geometrie in axialer oder radialer Richtung ausgeführt werden und erlaubt eine gute Anpassung.

In einer weiteren Ausführung bewegt das Betätigungselement durch axiale Bewegung zunächst das Zwischenelement von einem freien Zustand in einen arretierten Zustand bewegt, und schließt anschließend die Reibkupplung.

Das Betätigungselement wird somit für beide Funktionen genutzt. Hierdurch können weitere Bauteile eingespart werden und die Reibkupplung hat einen geringeren Platzbedarf. Aufgrund der geringeren Bauteileanzahl ist somit auch die Fehleranfälligkeit verringert.

In einer bevorzugten Ausbildung wird das Betätigungselement hydraulisch, elektrisch, pneumatisch oder mechanisch angetrieben.

Ein hydraulisch angetriebenes Betätigungselement kann hohe Stellkräfte aufbringen, so dass ein sicheres Betätigen, sowohl des Zwischenelementes, als auch der Kupplungselemente, umgesetzt werden kann.

Mit Hilfe eines elektrisch angetriebenen Betätigungselements kann ein einfacher Aufbau realisiert werden, der nicht über aufwändige Flüssigkeitsdichtungen verfügen muss, keine Zuleitungskanäle und Ventile benötigt, wie dies bei hydraulischen Ansteuerungen notwendig wäre und zentral mit Energie versorgt werden kann.

Bei einem pneumatischen Betätigungselement kann der Aufbau ebenfalls einfach gehalten werden. Durch den Aufbau kann das Gewicht verringert werden und das Einbringen von Wärme, wie etwa bei Elektroantrieben, unterbleibt, so dass insgesamt ein geringerer Wärmeeintrag erfolgt.

Durch ein mechanisch angetriebenes Betätigungselement kann ein exakter Verfahrweg sichergestellt und eine gute Steuerbarkeit erreicht werden.

In einer weiteren bevorzugten Ausbildung wird das Zwischenelement unabhängig vom Betätigungselement von einem freien in einen arretierten Zustand überführt.

Das Zwischenelement kann somit unabhängig vom Betätigungselement gesteuert werden. Hierdurch können unterschiedliche Stellkräfte für die jeweilige Ansteuerung realisiert werden, wie etwa größere Kräfte für das Schließen der Reibkupplung und kleinere Kräfte für das Betätigen des Betätigungselements. Damit ist weiterhin eine Optimierung der Stellzeiten und der Schaltkräfte möglich. Dies kann zu einer Verbesserung von Verschleiß führen und zu einer angepassten gewichtsoptimierten Bauteilauslegung.

In einer erfindungsgemäßen Ausführung ist die Reibkupplung eine nass oder trocken laufende Einscheibenkupplung oder Lamellenkupplung.

Durch eine nass laufende Kupplung können höhere Leistungen übertragen werden, so dass eine kompaktere Ausführung der Reibkupplung bei einer gegebenen Leistung möglich ist.

Eine trocken laufende Kupplung ermöglicht Gewichteinsparung, da das Schmiermittel entfällt und auch keine Ölpumpe oder ein Ölkühler notwendig ist.

In einer weiteren Ausbildung kann das Betätigungselement ein Kolben, eine Scheibe, ein Stempel oder eine Feder sein.

Durch die Verwendung von derartigen standardisierten Bauteilen können Kosten gesenkt werden. Der Kolben kann besonders vorteilhaft verwendet werden, wenn das Betätigungselement durch hydraulische oder pneumatische Antriebe betätigt wird. Die Ausführung als Scheibe kann etwa für die mechanische Betätigung eine einfache Konstruktion realisieren. Bei der Verwendung einer Feder kann die Konstruktion ein geringes Gewicht aufweisen und durch einen zusätzlichen Auslösemechanismus auf das Betätigungselement wirken, um kurze Betätigungszeiten zu realisieren.

In einer Ausführung wird das Betätigungselement in axialer Richtung durch eine Feder zurückgestellt.

Mit der Verwendung einer Feder, in Form einer Tellerfeder oder dergleichen, kann das Betätigungselement unter Vermeidung eines komplizierten Mechanismus zurückgestellt werden. Somit arbeitet das Betätigungselement gegen die Federkräfte und kann auch bei Energieausfall in die Grundposition zurückgefahren und eine hohe Betriebssicherheit erzielt werden.

Bei einer Ausbildung weist die Reibkupplung wenigstens einen Träger auf, zur beweglichen Halterung der Kupplungselemente einer Seite des Leistungszweiges, wobei der Träger eine Rotation der Kupplungselemente um deren Achse, auch im gekuppelten Zustand, blockiert.

Die Kupplungselemente können im gekuppelten Zustand keine Drehung ausführen, dadurch wird die Leistung von einer Seite der Reibkupplung in das Gehäuse geleitet und in Wärme umgewandelt. Durch die Bremsfunktion kann die Reibkupplung auch zur Verzögerung von Drehmomenten verwendet werden. Es ist auch möglich, durch weitere Sperrelemente eine Reibkupplung bereitzustellen, die zum einen als Kupplung und zum anderen als Bremse verwendet werden kann.

Die Erfindung wird anhand der Abbildungen weiter erläutert. Diese zeigen wie folgt:
Figur 1: ein erstes Ausführungsbeispiel der Erfindung mit einem beweglichen Zwischenelement an einem Innenumfang der Kupplungselemente.
Figur 2: ein zweites Ausführungsbeispiel der Erfindung mit einem beweglichen Zwischenelement an einem Außenumfang der Kupplungselemente.
Figur 3: ein drittes Ausführungsbeispiel der Erfindung mit einem beweglichen Zwischenelement an einem Innenumfang der Kupplungselemente in einer weiteren alternativen Ausführung.

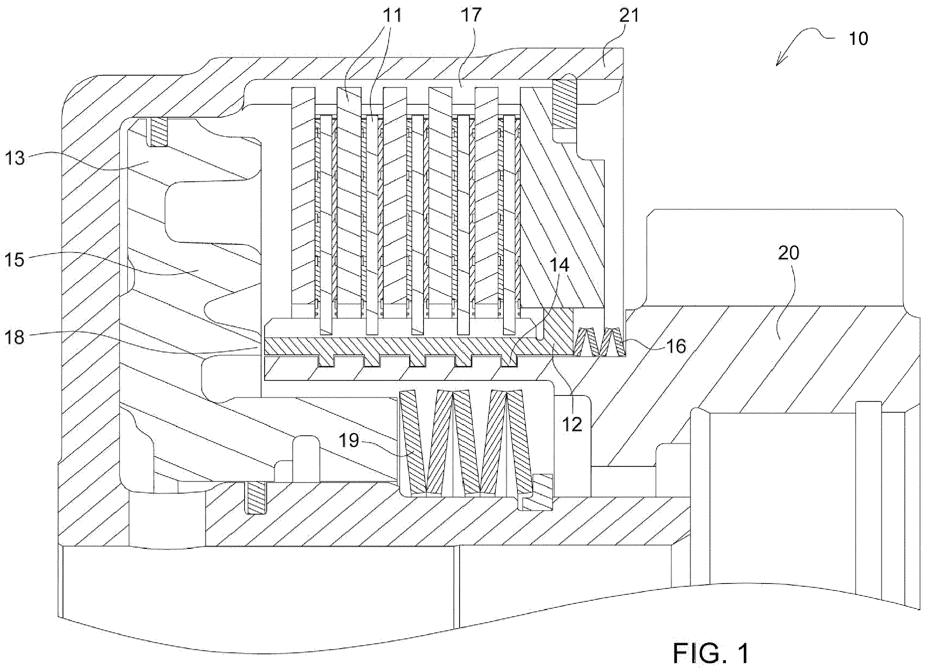

In Figur 1 ist eine Reibkupplung 10 gezeigt. Die Reibkupplung 10 weist mehrere Lamellen 11 in Form von Kupplungselementen 11 auf. Die Lamellen 11 sind zwischen einem äußeren 21 und einem inneren Anschluss 20 in der Reibkupplung 10 angeordnet.

Die beiden Anschlüsse 20, 21 stellen die Verbindung der Reibkupplung 10 zum Antriebsstrang dar. Die Lamellen 11 sind entlang ihrer axialen Richtung beweglich zu den Anschlüssen 20, 21 in entsprechenden Haltern 17 gelagert, so dass diese durch eine Verschiebung in axialer Richtung in Anlage zueinander gebracht werden oder geöffnet werden, so dass ein Lüftspiel vorliegt.

Im geschlossenen Zustand wird eine Leistung von einem der Anschlüsse 20, 21 auf den anderen übertragen, indem der Reibschluss der Lamellen 11 zur Übertragung genutzt wird. Die Lamellen 11 sind jeweils abwechselnd einem der Anschlüsse 20, 21 zugeordnet. Dabei sind die Anschlüsse 20, 21 jeweils unterschiedlichen Seiten des Leistungszweiges der Reibkupplung 10 zugeordnet.

In einer axialen Richtung der Kupplungselemente 11 ist ein Anschlag vorgesehen, wobei auf der axial gegenüberliegenden Seite der Kupplungselemente 11 ein Betätigungselement 13 vorgesehen ist. Das Betätigungselement 13 kann dabei zum Beispiel ein Kolben 15 sein, der durch einen den Kupplungselementen 11 gegenüberliegenden, rückseitigen Betätigungsraum mit Druck durch ein Medium beaufschlagt wird, sodass dieser axial gegen das Paket aus Kupplungselementen 11 gedrückt wird. Das Betätigungselement 13 ist dabei einem Anschluss 20, 21 zugeordnet.

Das Betätigungselement 13 kann durch ein Federpaket 19 mit einer Kraft belastet sein, die das Betätigungselement 13 wieder in die Ausgangsposition zurück stellt, wenn keine Betätigung der Kupplung 1 erfolgt.

In Figur 1 ist am Innenumfang der Kupplungselemente 11 ein Zwischenelement 12 vorgesehen. Das Zwischenelement 12 ist axial in Richtung der Kupplungselemente 11 verschieblich gelagert. In der gezeigten Position ist das Zwischenelement 12 mit einer Schaltverzahnung 14 im Freilauf dargestellt. Durch die Freilaufposition der Schaltverzahnung 14 kann sich das Zwischenelement 12 relativ zu dem Anschluss 20 frei drehen. Die Kupplungselemente 11, die am Zwischenelement 12 gehalten sind, sind dadurch ebenfalls frei drehbar. Somit liegt der freie Zustand des Zwischenelements 12 vor. Der freie Zustand des Zwischenelementes 12 zeichnet sich dadurch aus, dass ein freier Abstand zu dem Anschluss 20 vorhanden ist. Der axiale Abstand kann hierbei durch ein Federelement 16 im freien Zustand eingestellt werden.

Die Kupplungselemente 11 weisen zueinander ein Lüftspiel auf, so dass diese sich nicht berühren. Der Bauraum der Kupplungselemente 11 ist mit Öl gefüllt. Im normalen Betrieb ist ein Anschluss 20, 21 in Rotation, auch wenn die Kupplung 1 entkoppelt ist. Dadurch drehen sich die Kupplungselemente 11 dieses Anschlusses 20, 21 mit der gleichen Drehzahl. Im gezeigten Ausführungsbeispiel kann dies der Anschluss 21 sein. Somit würden die Kupplungselemente 11 des Anschlusses 21 mitdrehen. Die Kupplungselemente 11 des Anschlusses 20 sind jedoch durch den freien Zustand des Zwischenelements 12 nicht verbunden. Durch das Öl im Kupplungsraum erfolgt eine Kraftübertragung von dem sich drehenden Anschluss 21 auf das Öl durch die Kupplungselemente 11. Dies führt dazu, dass sich dieses Schermoment auch auf die frei drehbaren Kupplungselemente 11 des Anschlusses 20 überträgt und sich deren Drehzahl anpasst. Ein Verlustmoment durch die gegenseitigen Drehrichtungen der Kupplungselemente wird vermieden.

Das Zwischenelement 12 wird vom freien Zustand in den arretierten Zustand überführt, in dem durch das Betätigungselement 13 eine axiale Kraft in Richtung der Feder 16 des Zwischenelementes 12 ausgeübt wird. Dies erfolgt durch die Betätigungsfläche 18, die an einem Vorsprung des Betätigungselements 13 angebracht ist. Hierdurch wird das Zwischenelement 12 an den Anschluss 20 des Leistungszweiges gedrückt, so das durch die Schaltverzahnung, die zwischen dem Zwischenelement 12 und dem Anschluss 20 besteht, der freie Zustand beendet wird und das Zwischenelement drehfest mit dem Anschluss 20 verbunden ist. Durch die Verbindung sind die Kupplungselemente 11 des Zwischenelements 12 nun ebenfalls drehfest mit dem Anschluss 20 verbunden.

Das Betätigungselement 13 weist Druckflächen auf, die bei der axialen Verschiebung auf die Kupplungselemente 11 Druck ausüben und so die Kupplung schließen. Durch das axiale Verschieben des Bestätigungselements 13 erfolgt somit erst das axiale Verschieben des Zwischenelements 12, und anschließend das Schließen der Reibkupplung 10, so dass Leistung von einem Anschluss auf den anderen übertragen werden kann. Dies kann durch eine abgestimmte Geometrie des Betätigungselements 13 erfolgen. So kann die Betätigungsfläche 18 weiter in axialer Richtung vorstehen als die Druckflächen des Betätigungselements 13, welche die Kupplung schließen.

Der Öffnungsvorgang der Kupplung erfolgt in umgekehrter Reihenfolge. Damit liegen in der vollständig geöffneten Kupplung die Kupplungselemente 11 wieder mit einem Lüftspiel zueinander und das Zwischenelement 12 ist im freien Zustand.

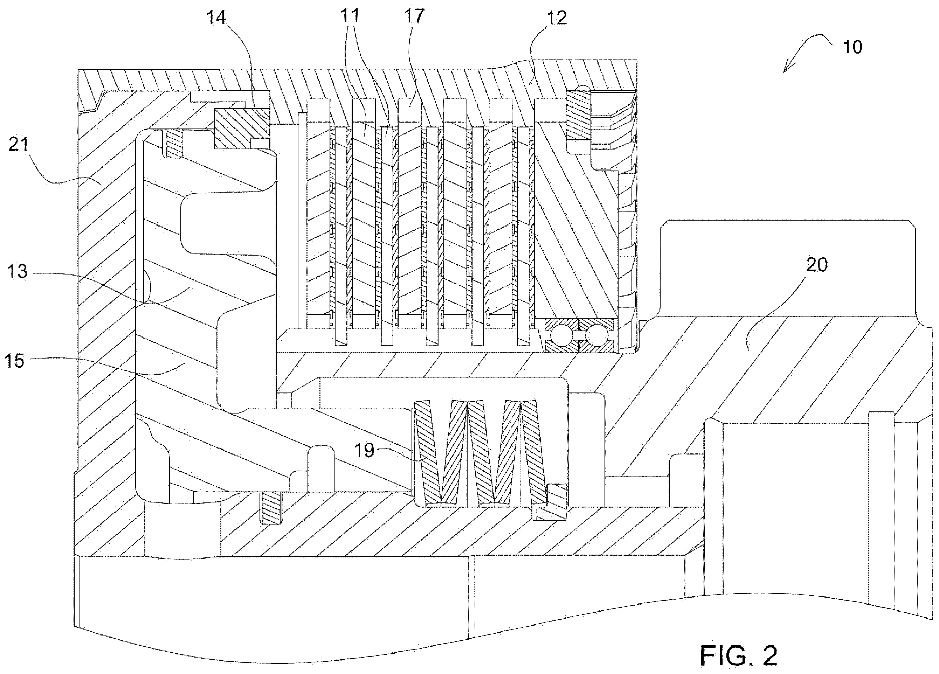

In Figur 2 sind gleiche Komponenten mit der gleichen Bezugsnummer beschriftet.

Das Zwischenelement 12 ist am Anschluss 21 auf einer Seite der Kupplung 1 angebracht. Das Zwischenelement 12 kann sich dabei im freien Zustand relativ zum Anschluss 21 drehen. Am Zwischenelement 12 sind die Kupplungselemente 11 vorgesehen, die abwechselnd mit den Kupplungselementen des Anschlusses 20 in axialer Richtung verschieblich angeordnet sind.

Am Kolben 15 ist ein Abschnitt mit einer Schaltverzahnung 14 vorgesehen. Das Zwischenelement 12 ist axial unverschieblich, jedoch drehbar angebracht. An einem Vorsprung weist das Zwischenelement 12 ebenfalls eine komplementäre Schaltverzahnung auf, die für den Eingriff mit der Schaltverzahnung 14 ausgelegt ist und im freien Zustand zu dieser einen axialen Abstand aufweist.

Durch das Verschieben des Kolben 15 in axialer Richtung wird die Schaltverzahnung 14 in Eingriff gebracht, so dass das Zwischenelement 12 an dem Anschluss 21 arretiert ist und mit diesem drehfest verbunden ist. Wird der Kolben 15 weiter axial verschoben, werden die Kupplungselemente 11 miteinander verpresst und die Reibkupplung 10 geschlossen. Zum Öffnen der Kupplung laufen die Vorgänge in umgekehrter Reihenfolge ab.

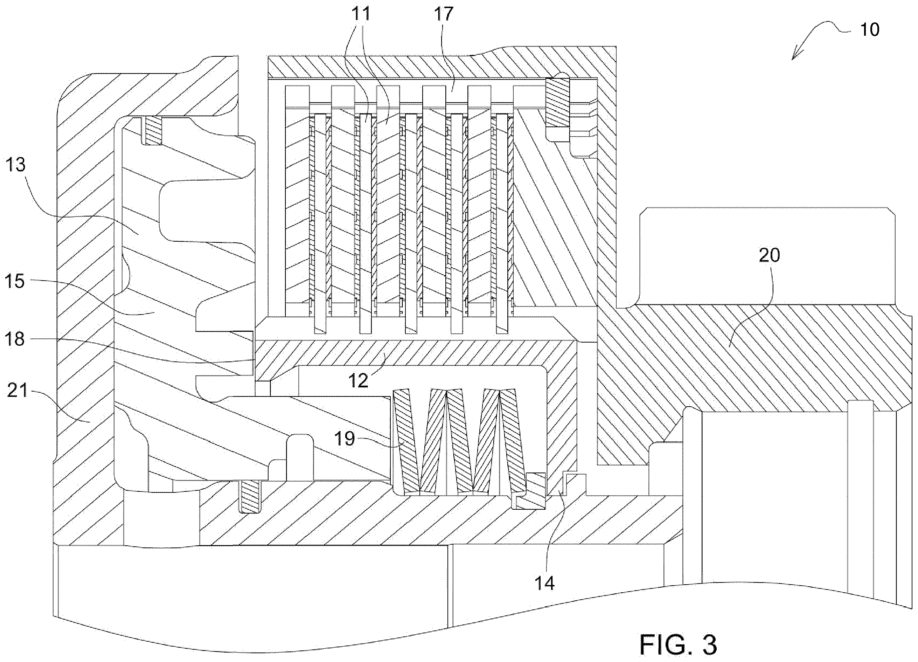

In Figur 3 sind gleiche Komponenten mit der gleichen Bezugsnummer beschriftet.

Hier ist eine alternative Ausführung zur Figur 1 gezeigt. Dabei weist das Zwischenelement 12 einen radialen Abschnitt auf, an dessen äußeren Ende sich in axialer Richtung eine Schaltverzahnung 14 befindet. Im freien Zustand liegt zwischen der Schaltverzahnung 14 und dem Anschluss 21 ein axialer Spalt vor, so dass das Zwischenelement vom Anschluss 21 unabhängig drehbar ist. Durch das axiale Verschieben des Kolbens 15 wird durch die Betätigungsfläche 18 das Zwischenelement 12 axial in Richtung des Anschlusses 21 gedrückt, so dass die Schaltverzahnung 14 mit dem Anschluss 21 in Eingriff kommt und mit diesem drehfest verbunden wird. Das Zwischenelement ist dann im arretierten Zustand. Bei weiterer axialer Verschiebung des Betätigungselements 13 werden dann die Kupplungselemente 11 zusammengepresst, so dass die Kupplung geschlossen wird. Bei Öffnen der Kupplung erfolgen die Schritte in umgekehrter Reihenfolge.

### Bezugszeichenliste:

- 10: Reibkupplung
- 11: Kupplungselement
- 12: Zwischenelement
- 13: Betätigungselement
- 14: Sperrsynchronisation, Klauenkupplung, Schaltverzahnung
- 15: Kolben
- 16: Feder (Zwischenelement)
- 17: Halter
- 18: Betätigungsfläche
- 19: Feder (Betätigungselement)
- 20: Anschluss
- 21: Anschluss

## Patentansprüche

1. Reibkupplung (10) mit wenigstens zwei miteinander kuppelbaren Kupplungselementen (11),
die axial zueinander beweglich angeordnet sind,
wobei direkt benachbarte Kupplungselemente (11) jeweils zwei Seiten eines Leitungszweiges der Kupplung zugeordnet sind,
einem Zwischenelement (12), an dem die Kupplungselemente (11) einer Seite des Leistungszweiges in einer axialen Richtung der Kupplungselemente (11) beweglich gehalten sind, wobei das Zwischenelement (12) zwischen einem arretierten Zustand und einem freien Zustand schaltbar ist, und
einem Betätigungselement (13) zum Öffnen und Schließen der Reibkupplung (10), wobei im freien Zustand eine freie Drehung der gehaltenen Kupplungselemente (11) gegenüber der zugeordneten Seite des Leistungszweiges zugelassen ist, und im arretierten Zustand die gehaltenen Kupplungselemente (11) gegen eine freie Drehung blockiert sind.

2. Reibkupplung (10) nach Anspruch 1, **dadurch gekennzeichnet, dass** das Zwischenelement (12) die Kupplungselemente (11) an ihrem jeweiligen Außen- oder an ihrem jeweiligen Innenumfang hält.

3. Reibkupplung (10) nach Anspruch 1 oder 2, **dadurch gekennzeichnet, dass** das Betätigungselement (13) das Zwischenelement (12) von einem freien Zustand in einen arretierten Zustand bewegt.

4. Reibkupplung (10) nach einem der vorangehenden Ansprüche, **dadurch gekennzeichnet, dass** das Zwischenelement (12) in axialer Richtung von einem freien Zustand in einen arretierten Zustand überführt wird.

5. Reibkupplung (10) nach einem der vorangehenden Ansprüche, **dadurch gekennzeichnet, dass** das Zwischenelement (12) mittels einer Sperrsynchronisation (14), einer Klauenkupplung oder einer Schaltverzahnung von einem freien in einen arretierten Zustand überführt wird.

6. Reibkupplung (10) nach einem der vorangehenden Ansprüche, **dadurch gekennzeichnet, dass** das Betätigungselement (13) durch axiale Bewegung zunächst das Zwischenelement (12) von einem freien Zustand in einen arretierten Zustand bewegt, und anschließend die Reibkupplung (10) schließt.

7. Reibkupplung (10) nach einem der vorangehenden Ansprüche, **dadurch gekennzeichnet, dass** das Betätigungselement (13) hydraulisch, elektrisch, pneumatisch oder mechanisch angetrieben wird.

8. Reibkupplung (10) nach einem der vorangehenden Ansprüche, **dadurch gekennzeichnet, dass** das Zwischenelement (12) unabhängig vom Betätigungselement (13) von einem freien in einen arretierten Zustand überführt wird.

9. Reibkupplung (10) nach einem der vorangehenden Ansprüche, **dadurch gekennzeichnet, dass** die Reibkupplung (10) eine nass oder trocken laufende Einscheibenkupplung oder Lamellenkupplung ist.

10. Reibkupplung (10) nach einem der vorangehenden Ansprüche, **dadurch gekennzeichnet, dass** das Betätigungselement (13) ein Kolben (15), eine Scheibe, ein Stempel oder eine Feder ist.

11. Reibkupplung (10) nach einem der vorangehenden Ansprüche, **dadurch gekennzeichnet, dass** das Betätigungselement in axialer Richtung durch eine Feder (16) zurückgestellt wird.

12. Reibkupplung (10) nach einem der vorangehenden Ansprüche, **dadurch gekennzeichnet, dass** die Reibkupplung (10) wenigstens einen Träger (17) aufweist zur beweglichen Halterung der Kupplungselemente (11) einer Seite des Leistungszweiges, wobei der Träger eine Rotation der Kupplungselemente (11) um deren Achse, auch im gekoppelten Zustand, blockiert.
